# FASCICULE DE BREVET EUROPEEN

(11) **EP 3 817 937 B1**
(45) Date de publication et mention de la délivrance du brevet: **04.09.2024**
(21) Numéro de dépôt: 19737009.1
(22) Date de dépôt: 25.06.2019
(51) Int. Cl.: B60K 1/04

(54) **AGENCEMENT D'UN SOUBASSEMENT DE CAISSE D'UN VÉHICULE INTÉGRANT UN ENSEMBLE DE BATTERIES ET VÉHICULE AYANT UN TEL AGENCEMENT**
ANORDNUNG EINES KAROSSERIEUNTERBAUS EINES FAHRZEUGS MIT INTEGRIERTER BATTERIEANORDNUNG UND FAHRZEUG MIT EINER SOLCHEN ANORDNUNG
ARRANGEMENT OF A BODY UNDERSTRUCTURE OF A VEHICLE INTEGRATING A BATTERY ASSEMBLY AND VEHICLE HAVING SUCH AN ARRANGEMENT

(30) Priorité: 03.07.2018 FR 1856106
(43) Date de publication de la demande: 12.05.2021
(73) Titulaire: Ampere SAS, 92100 Boulogne-Billancourt (FR); NISSAN MOTOR CO., LTD., Yokohama-shi, Kanagawa 221-0023 (JP)
(72) Inventeur: RIOU, Jean-Christophe, 78640 Villiers et Frederic (FR); DUGARDIN, Stéphane, 78230 Le Pecq (FR); SARI HASSOUN, Sarah, 78340 Les Clayes sous Bois (FR); CHAFFANJON, Jean-Marc, 78590 Noisy le Roi (FR); GAUTHIER, Christian, G., 78340 Les Clayes sous Bois (FR)
(74) Mandataire: Renault Group
(86) Numéro de dépôt international: PCT/EP2019/066828
(87) Numéro de publication internationale: WO 2020/007651

(56) Documents cités:
- DE-A1- 102014 224 545
- DE-A1- 102017 123 400
- JP-A- 2006 040 547
- US-A1- 2012 235 471

## Description

### Domaine technique de l'invention

L'invention est du domaine des véhicules, plus particulièrement des véhicules automobiles. L'invention trouve une application toute particulière dans la conception des véhicules à propulsion de type en tout ou partie électrique nécessitant l'intégration d'un ensemble de batteries.

L'invention concerne un agencement d'un soubassement de véhicule comportant une batterie, un dispositif de protection de l'ensemble de batteries.

### État de la technique

Il est connu des véhicules, notamment des automobiles, comportant un dispositif de traction utilisant l'énergie électrique stockée dans un ensemble de batteries. Dans un souci de maintenir une certaine capacité de chargement, voire de garder un comportement routier de premier ordre, il est connu de disposer un tel ensemble de batteries sous la caisse du véhicule. Cela permet en outre d'assurer une maintenance, voire même un changement rapide de l'ensemble de batteries au besoin. Autant l'avantage d'un tel agencement n'est plus à démontrer, autant une telle disposition pénalise la protection même de l'ensemble de batteries en cas de choc, notamment en cas de choc latéral.

En effet, le soubassement d'une caisse de véhicule automobile est conçu pour supporter entre autres les éléments techniques qui sont utiles au fonctionnement du véhicule. A titre d'exemple, le système de freinage, le système de liaison au sol, et/ou le système électrique du véhicule sont fixés au plancher du véhicule par l'extérieur, c'est-à-dire par le dessous. Cela engendre des problèmes d'architecture sous caisse. Il faut conjuguer à la fois le positionnement de l'ensemble de batteries et le fonctionnement de ces systèmes. Pour cette raison, un espace technique doit être respecté entre l'ensemble de batteries et les bords longitudinaux du soubassement que sont les bavolets du véhicule.

Il a été relevé un inconvénient lié à cet espace fonctionnel séparant l'ensemble de batteries des bords longitudinaux. Cet espace majoritairement vide génère une inertie en cas de choc latéral de sorte que l'intensité du choc est quasi intégralement transmise à l'ensemble de batteries, ce qui peut provoquer des dommages irréparables de cet ensemble, voire même un risque d'incendie en cas de situation extrême. DE10201723400-A1 décrit un dispositif de protection de la batterie contre les chocs latéraux. Il a également été relevé que du fait d'un positionnement sous caisse, une légère mise en saillie de l'ensemble de batteries verticalement vers le bas la rend plus vulnérable au choc, notamment en cas de franchissement d'un trottoir.

L'invention présentée ici résout les inconvénients des solutions de l'art antérieur en proposant un agencement d'un soubassement de caisse de véhicule comportant un dispositif de protection d'un ensemble de batterie ainsi qu'un véhicule comportant un tel dispositif pour améliorer l'aspect sécuritaire du véhicule en limitant la dégradation de l'ensemble de batteries, notamment en cas de choc latéral.

### Objet de l'invention

A cet effet, l'objet de la présente invention a trait à un agencement d'un soubassement de caisse comportant latéralement des bavolets, au moins une barrière transversale reliant les bavolets entre eux, ainsi qu'un plancher disposé à recouvrement des bavolets et de la barrière, tandis que le véhicule comporte au moins un élément fonctionnel s'étendant sous le soubassement du véhicule, et que le dispositif de protection comportant au moins un insert disposé entre un bavolet et un bord latéral de l'ensemble de batteries selon un axe transversale au véhicule. L'agencement du soubassement est remarquable en ce que l'insert est conformé selon l'élément fonctionnel, notamment au moyen d'au moins un logement dédié à la réception de l'élément fonctionnel, l'insert comprenant une portion intérieure, une portion extérieure et au moins une interface de fixation rendant apte le montage réversible dudit élément fonctionnel sur ledit moyen de protection, et l'agencement du soubassement étant caractérisé en ce que l'interface de fixation est réalisée par moulage de la portion extérieure, l'interface étant du type d'un crochet déformable permettant de fixer l'élément fonctionnel.

De manière avantageuse, l'absorption de l'effort d'un choc transversal est améliorée du fait que l'écart entre le soubassement et l'ensemble de batteries est réduit à son minimum. L'insert est ainsi conçu de manière à entourer au moins partiellement l'élément fonctionnel, ce qui tend à réduire l'espace dépourvu de matière entre le bavolet et l'ensemble de batteries. De la sorte, l'effort d'un choc venant d'un obstacle percutant latéralement le véhicule est rapidement transmis à des moyens de transmission d'effort entourant l'ensemble de batteries dans un premier temps, avant d'être absorbé par le dispositif de protection.

Selon d'autres caractéristiques, l'agencement objet de l'invention peut comprendre les caractéristiques suivantes prises séparément ou en combinaison entre elles :
- l'insert comprend une portion intérieure assujettie à l'ensemble de batteries de telle sorte qu'elle présente un profil sensiblement identique à celui du bord latéral afin de venir verticalement à recouvrement de ce dernier par le dessous,
- l'insert comprend une portion extérieure assujettie au bavolet de telle sorte qu'au moins une partie, notamment avant de cette portion, présente un profil sensiblement identique à celui du bavolet afin de s'étendre transversalement au droit de ce dernier, notamment avec un écart approximativement constant,
- l'insert comprend une portion extérieure assujettie à un élément fonctionnel de telle sorte qu'au moins une partie, notamment arrière de cette portion, présente un profil sensiblement identique à celui de l'élément fonctionnel afin de s'étendre transversalement au droit de ce dernier avec un écart approximativement constant,
- l'insert est réalisé par moulage d'un matériau plastique, notamment une matière composite,
- la portion extérieure a une hauteur inférieure à la hauteur de la portion intérieur, les portions définissant une même face intérieure approximativement plane fixée à un ensemble de rigidification,
- l'élément fonctionnel appartient à un système de commande électrique, un système de freinage et/ou un système de liaison au sol,l'insert comprend un maillage de nervures de rigidification entrecroisées rendant apte la répartition d'un choc latéral le long du bavolet et/ou d'un bord latéral de l'ensemble de batteries via une poutre verticale de protection,
- la portion intérieure s'étend en saillie verticale hors d'un fond de l'ensemble de batteries délimité par une cloison horizontale de protection sensiblement plane de l'ensemble de batteries,
- la portion extérieure est recouverte par une cloison aéraulique dont un bord intérieur contourne la portion intérieure, la cloison aéraulique et la portion extérieure définissant un espace au travers duquel l'élément fonctionnel s'étend longitudinalement.

L'invention concerne aussi un véhicule, notamment du type d'une automobile, comprend un agencement ayant au moins l'une quelconque des caractéristiques précédentes.

### Description sommaire des dessins

Quelques buts, caractéristiques et avantages de l'invention apparaîtront à la lecture de la description suivante, donnée uniquement à titre d'exemple non limitatif, et faite en référence aux dessins annexés sur lesquels :
- la figure 1 est une représentation schématique partielle de dessous d'un véhicule, selon l'invention;
- la figure 2 est un agrandissement d'un côté latéral du véhicule de la figure 1 auquel une cloison aéraulique a été retirée, représentant le insert d'un ensemble de batteries, selon l'invention,
- la figure 3 est un agrandissement d'un côté opposé latéral du véhicule de la figure 1 auquel un insert a été retiré,
- la figure 4 représente de manière schématique une perspective selon une coupe A-A de la figure 2, l'agencement d'un côté d'un soubassement de caisse d'un véhicule, selon l'invention ;
- la figure 5 représente de manière schématique selon une coupe B-B de la figure 2, l'agencement d'un côté opposé du soubassement de caisse du véhicule, selon l'invention.

### Description de modes préférentiels de l'invention

Sur l'ensemble de la description, l'avant et l'arrière sont définis selon le sens de marche d'un véhicule automobile. En marche avant et en ligne droite, le véhicule progresse de l'arrière vers l'avant, d'axe X. D'autre part, on considère que le véhicule repose sur un sol horizontal d'axes X et Y. Les termes « inférieur » et « supérieur » font référence à un axe vertical Z.

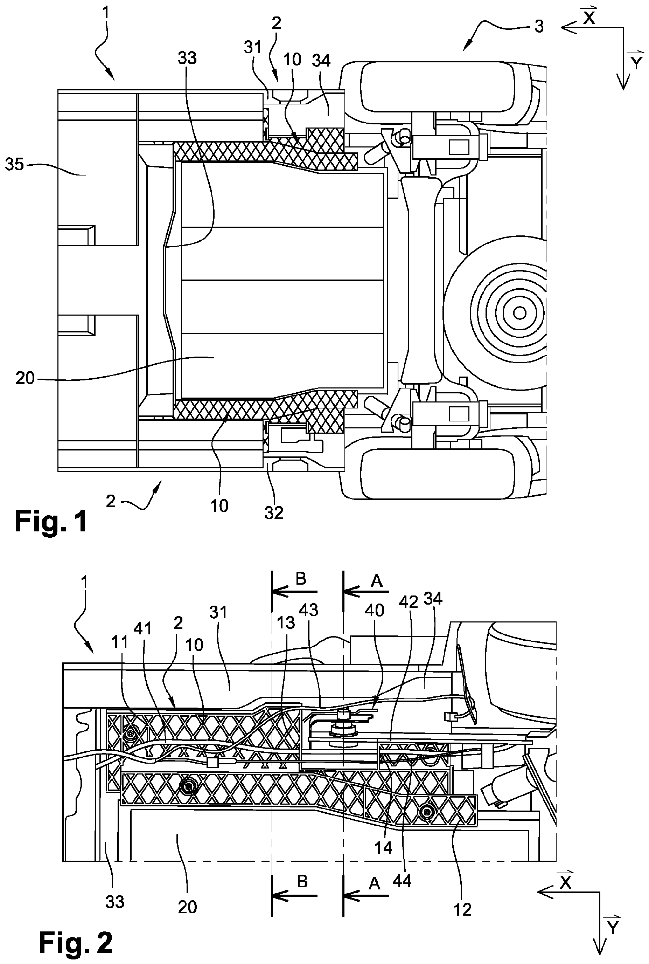

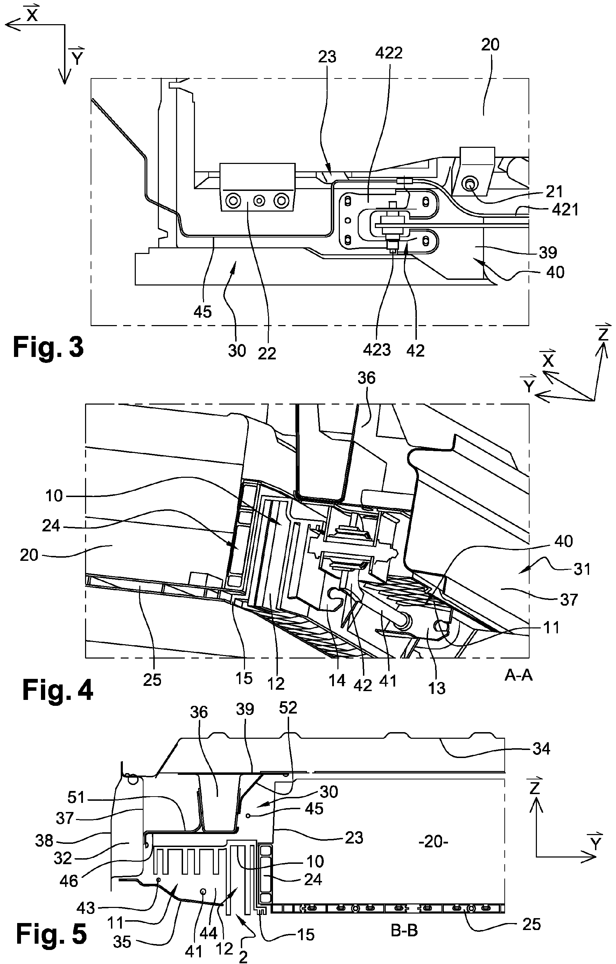

La figure 1 illustre schématiquement un véhicule 1 vu de dessous, tout du moins une partie de véhicule comportant un essieu de roues arrière 3 disposé de manière adjacente à un ensemble de batteries 20, tous deux étant reliés au soubassement de caisse du véhicule. L'ensemble de batteries 20 est un module réalisé d'un seul tenant et disposé préférentiellement au centre du véhicule selon un axe transversal, à proximité de l'essui de roues arrière 3 dans un but de maintenir un comportement routier de premier ordre pour le véhicule ainsi équipé d'un système de traction électrique. Le soubassement de caisse comprend des bavolets 31, 32 reliés entre eux par une barrière transversale 33 et un plancher 34 les surplombant. Le bavolet 31, 32 est composé d'une doublure 38 de côté de caisse non représentée, la doublure 38 étant reliée à un renfort 37, préférentiellement de section en U comme cela est rendu visible aux figures 4 et 5. Le soubassement de caisse du véhicule comprend ainsi un bavolet 31, 32 situé en partie inférieure gauche ou droite du véhicule, qui présente une section fermée. Chaque bavolet 31, 32 est latéralement prolongé vers l'intérieur du véhicule par un ensemble de rigidification 30 qui se compose pour partie de pièces de liaison 36, 39, 46 et de pièces de renfort 51,52. Les pièces de liaison 36, 39, 46 permettent de relier les bavolets 31, 32 entre eux, en complément du plancher 34. La pièce de liaison 39 peut être une traverse reliée au plancher 34 de manière à former avec ce dernier une poutre transversale. Les autres pièces de liaison 36 et 46 peuvent être respectivement une entretoise et une platine de fixation, l'entretoise assurant un assemblage de la platine de fixation à la traverse, tandis que la platine de fixation est soudée d'un côté au renfort 37 de bavolet 31, 32 et d'un côté opposé à l'entretoise. La pièce de renfort 52 relie entre elles les pièces de liaison 36 et 39. La pièce 51 de renfort vient pour partie à recouvrement de la pièce de liaison 46 en reliant entre elles la pièce de liaison 36 et le bavolet 31, 32.

L'ensemble de rigidification 30 garantit une rigidité permettant de supporter le poids de l'ensemble de batteries 20 qui est rapporté par le dessous du véhicule et fixé par exemple directement au plancher 34.

La disposition de l'ensemble de rigidification 30 en combinaison avec le bavolet 31, 32 et l'ensemble de batteries 20 délimite un espace au travers duquel est logé un élément fonctionnel 40.

L'élément fonctionnel 40 peut appartenir à un système de commande électrique du véhicule, il peut être du type d'un câble électrique 41, 43, 44 destiné à être relié notamment à un capteur ou un calculateur embarqué dans le véhicule pour assurer une fonction de commande. Il peut aussi être du type d'un câble au travers duquel circule un courant de puissance pour alimenter un actionneur, par exemple un moteur électrique d'entraînement du véhicule.

L'élément fonctionnel 40 peut appartenir à un système de freinage, il peut être du type d'un conduit hydraulique 45.

L'élément fonctionnel 40 peut appartenir à un système de liaison au sol, il peut être du type d'un bras d'articulation 42 relié à un essieu de roues arrière 3. Le bras d'articulation 42 peut comprendre un levier 421 relié d'un côté à l'essieu de l'autre au plancher 34 par un palier 423 monté sur une chape 422. La chape 422 peut également former un moyen de support au conduit hydraulique 45 du système de freinage.

La partie inférieure du plancher 34 comprend ainsi plusieurs éléments fonctionnels 40 qui contournent de part et d'autre l'ensemble de batteries 20, par ses bords latéraux. La partie inférieure du plancher 34 comprend également un moyen de fixation 21, 22 de l'ensemble de batteries 20 au soubassement de caisse du véhicule. Il peut s'agir de supports avant et arrière montés d'un côté sur les flancs latéraux de l'ensemble de batteries 20 par exemple par emboîtement, d'un autre sur le plancher 34 par exemple par vissage. Cela rend avantageusement le montage réversible de l'ensemble de batteries 20 pour en garantir sa maintenance.

L'ensemble de batteries 20 comprend un moyen de transfert d'efforts constitué d'au moins d'une poutre verticale 24 encerclant en partie ses bords, tout du moins ses bords latéraux. Le bord transversal avant est localisé à proximité d'une barrière transversale 33 reliant les bavolets 31, 32. La barrière transversale 33 peut comporter en partie centrale emboutie de telle sorte qu'elle présente un profil concave à l'intérieur duquel est disposé le bord avant de l'ensemble de batteries 20. En cas de choc frontal, l'énergie du choc peut ainsi être transmis à chacun des bavolets 31, 32 afin de protéger l'ensemble de batteries 20.

L'agencement du soubassement comprend un dispositif 2 de protection de batterie qui comprend un insert 10 logé transversalement entre le bavolet 31, 32 et l'ensemble de batteries 20.

Sur la figure 1, le dessous du véhicule comprend un insert gauche et par symétrie un insert droit, chacun étant logé entre l'ensemble de batteries 20 et le bavolet 31, 32 respectif.

Chaque insert 10 est conformé selon l'élément fonctionnel présent dans la zone séparant le bavolet 31, 32 de l'ensemble de batteries 20.

Dans le mode de réalisation de l'agencement du soubassement de la figure 2, laquelle représente le côté gauche du véhicule, l'élément fonctionnel 40 est un câble électrique 41, 44, un autre élément fonctionnel étant un bras d'articulation 42 d'un système de liaison au sol, un autre élément fonctionnel étant ledit moyen de fixation 21, 22.

L'insert 10 comprend une portion intérieure 12 et une portion extérieure 11.

L'insert 10 est réalisé d'un seul tenant par moulage.

Selon une variante de réalisation, l'une d'entre les portions extérieure 11 et intérieure 12 est réalisée par surmoulage de l'autre d'entre les portions extérieure 11 et intérieure 12 d'une matière plastique différentes, voire par exemple d'une matière composite.

La portion intérieure 12 est conformée selon le câble électrique 41, 43, 44 en ce sens qu'elle comprend des interfaces de fixation 13, 14 réalisées par moulage de la portion extérieure 11. Préférentiellement, l'interface de fixation est du type d'un crochet déformable, conformé selon la dimension de l'élément fonctionnel à fixer. Une telle conception permet de monter rapidement l'élément fonctionnel puisque l'ensemble des interfaces de fixation sont rassemblées sur une seule et même pièce, ici la portion extérieure d'un insert d'un dispositif de protection d'un ensemble de batteries 20.

L'insert 10 comprend un logement dans lequel est disposé une chape 422 sur laquelle est montée un palier 423 d'articulation d'un bras d'articulation 42. Le logement s'étend sur toute l'épaisseur de la portion extérieure 11 de l'insert.

L'insert 10 comprend en outre des évidements dans lesquels sont disposés lesdits moyens de fixation 21, 22.

Sur la figure 2, les câbles 41, 43, 44 passent sous la portion extérieure 11 de l'insert qui a une épaisseur inférieure à l'épaisseur de la portion intérieure 12.

Sur la figure 1, seule la portion extérieure 11 est recouverte par une cloison aéraulique 35. Un tel recouvrement permet de créer un espace en Z dans lequel évolue les câbles 41, 43, 44 comme cela est rendu visible sur la figure 5.

Sur la figure 3, le côté droit du soubassement est représenté avec un élément fonctionnel 40 qui est du type d'un conduit hydraulique 45 appartenant à un système de freinage du véhicule. Là aussi, le système de freinage s'étend entre l'ensemble de batteries 20 et le bavolet 3. Le dispositif 2 de protection de l'ensemble de batteries 20 est adapté au conduit hydraulique 45. A cet effet, l'insert 10 comprend au niveau de sa portion extérieure 11, une rainure ménagée sur sa face intérieure qui fait directement face au dispositif 30 de rigidification.

Une telle conformation de la portion extérieure 11 rend apte le positionnement du conduit hydraulique 45.

Le bord extérieur de la portion extérieure 11 suit un profil défini par le renfort 37 du bavolet 31, 32, tout en maintenant un écart en Y sensiblement constant. De la sorte l'insert 10 est rapidement mis à contribution pour transférer l'énergie d'un choc latéral appliqué contre le bavolet 31, 32.

Le bord intérieur de la portion intérieure 12 suit sensiblement un profil défini par le bord 23 de l'ensemble de batteries 20 contre lequel est disposé la poutre verticale 24. Une telle conception permet avantageusement de répartir l'effort d'un choc latéral appliqué au bavolet 31, 32 directement le long d'un cadre composé pour partie de la poutre verticale 24 qui est conformée de manière à encercler l'ensemble de batteries 20.

Afin de protéger le fond de l'ensemble de batteries 20 de tout choc pouvant provenir du dessous de caisse, par exemple lorsque le véhicule franchit un trottoir, le dispositif 2 de protection est conformé pour venir localement à recouvrement de l'ensemble de batteries 20 de sorte qu'il s'étend sous ce dernier. A cet effet, le dispositif 2 de protection comprend une hauteur telle qu'une fois fixé à la structure de caisse, la portion intérieure 12 s'étend en saillie verticale hors du fond de l'ensemble de batteries 20 tel qu'il est délimité par une cloison 25 horizontale de protection sensiblement plane venant à recouvrement de la face inférieure de l'ensemble de batteries 20. L'écart entre la partie infra de l'insert 10 et la cloison 25 horizontale est ainsi compris en 5 et 10 mm.

La portion intérieure 12 comprend en outre une rainure 15 longitudinale qui fait office de butée en Z contre laquelle l'ensemble de batteries 20 au moyen de la poutre verticale 24 est appui. La rainure 15 en saillie transversale hors de la portion intérieure 12 rend apte l'indexage de l'insert 10 par rapport à l'ensemble de batteries 20.

La cloison aéraulique 35 recouvrant uniquement la portion extérieure 11 de l'insert 10, est directement fixée sur le renfort 37 de bavolet 31, 32 par l'une de ses zones de latérale, l'autre de ses zones latérales opposée vient sensiblement au droit de la portion intérieure 12. Cette dernière comportant des zones pleines et des zones creuses séparées par le maillage de nervures, assure localement une réduction des effets de turbulences sous caisse à l'identique de ce qui est réalisé par la cloison aéraulique 35.

L'agencement du soubassement de caisse tel que pr
écédemment décrit est rendu possible pour partie par une fixation de chacun des inserts 10 du dispositif 2 de protection de l'ensemble de batteries 20. Chaque portion extérieure 11 ou intérieure 12 comprend à cet effet au moins un fut au travers duquel est disposée une vis de fixation de l'insert 10 directement au dispositif 30 de rigidification de la caisse du véhicule.

L'agencement du soubassement de caisse précédemment décrit est remarquable en ce qu'il permet d'améliorer la protection des occupants du véhicule en proposant d'intégrer un dispositif de protection de l'ensemble de batteries 20 visant à réduire l'inertie dynamique en cas de choc. La proximité des inserts 10 par rapport aux éléments structurant du soubassement de caisse, mais aussi aux éléments fonctionnels présentes au niveau du soubassement permet avantageusement de répartir de manière quasi instantanée l'effort d'un choc latéral appliqué à un bavolet 31, 32.

Chaque insert 10 est en outre conformé pour intégrer des moyens de fixation, ce qui permet de communaliser les éléments fonctionnels sous caisse pour différents types de véhicules, selon qu'ils comprennent ou non un système de traction électrique.

L'intégration d'un dispositif 2 de protection est d'autant plus remarquable qu'il s'étend longitudinalement sur quasi toute la longueur de l'ensemble de batteries 20 ce qui tend à réduire la conséquence de l'impact d'un choc latéral appliqué au bavolet 31, 32.

La structure de l'insert 10 basée sur un maillage de nervures de rigidification permet de conjugueur à la fois rigidité et légèreté.

## Revendications

1. Agencement d'un soubassement de caisse d'un véhicule (1) comportant un dispositif (2) de protection d'un ensemble de batteries (20), le soubassement de caisse comportant latéralement des bavolets (31, 32), au moins une barrière (33) transversale reliant les bavolets entre eux, ainsi qu'un plancher (34) disposé à recouvrement des bavolets et de la barrière, le véhicule comportant au moins un élément fonctionnel (40) s'étendant sous le soubassement du véhicule, le dispositif (2) de protection comportant au moins un insert (10) disposé entre un bavolet (31, 32) et un bord latéral (23) de l'ensemble de batteries (20) selon un axe transversale au véhicule, l'insert (10) étant conformé selon l'élément fonctionnel, notamment au moyen d'au moins un logement dédié à la réception de l'élément fonctionnel (40), l'insert (10) comprenant une portion intérieure (12), une portion extérieure (11) et au moins une interface de fixation (13, 14) rendant apte le montage réversible dudit élément fonctionnel (40) sur ledit moyen de protection, **caractérisé en ce que** l'interface de fixation (13, 14) est réalisée par moulage de la portion extérieure (11), l'interface étant du type d'un crochet déformable permettant de fixer l'élément fonctionnel (40).

2. Agencement selon la revendication 1, **caractérisé en ce que** l'insert comprend une portion intérieure (12) assujettie à l'ensemble de batteries de telle sorte qu'elle présente un profil sensiblement identique à celui du bord latéral (23) afin de venir verticalement à recouvrement de ce dernier par le dessous.

3. Agencement selon la revendication 1 ou 2, **caractérisé en ce que** l'insert comprend une portion extérieure (11) assujettie au bavolet (31, 32) de telle sorte qu'au moins une partie, notamment avant de cette portion, présente un profil sensiblement identique à celui du bavolet (31, 32) afin de s'étendre transversalement au droit de ce dernier, notamment avec un écart approximativement constant.

4. Agencement selon la revendication 1 ou 2, **caractérisé en ce que** l'insert comprend une portion extérieure (11) assujettie à un élément fonctionnel (40) de telle sorte qu'au moins une partie, notamment arrière de cette portion, présente un profil sensiblement identique à celui de l'élément fonctionnel (40) afin de s'étendre transversalement au droit de ce dernier avec un écart approximativement constant.

5. Agencement selon l'une quelconque des revendications précédentes, **caractérisé en ce que** l'insert est réalisé par moulage d'un matériau plastique, notamment une matière composite.

6. Agencement selon l'une quelconque des revendications précédentes, **caractérisé en ce que** la portion extérieure (11) a une hauteur inférieure à la hauteur de la portion intérieure (12), les portions définissant une même face intérieure approximativement plane fixée à un ensemble de rigidification (30).

7. Agencement selon l'une quelconque des revendications précédentes, **caractérisé en ce que** l'élément fonctionnel (40) appartient à un système de commande électrique, un système de freinage et/ou un système de liaison au sol.

8. Agencement selon l'une quelconque des revendications précédentes, **caractérisé en ce que** l'insert comprend un maillage de nervures de rigidification entrecroisées rendant apte la répartition d'un choc latéral le long du bavolet (31, 32) et/ou d'un bord (23) latéral de l'ensemble de batteries (20) via une poutre (24) verticale de protection.

9. Agencement selon la revendication précédente, **caractérisé en ce que** la portion intérieure (12) s'étend en saillie verticale hors d'un fond de l'ensemble de batteries délimité par une cloison (25) horizontale de protection sensiblement plane de l'ensemble de batteries.

10. Agencement selon l'une quelconque des revendications précédentes, **caractérisé en ce que** la portion extérieure (11) est recouverte par une cloison aéraulique (35) dont un bord intérieur contourne la portion intérieure (12), la cloison aéraulique et la portion extérieure (11) définissant un espace au travers duquel l'élément fonctionnel (40) s'étend longitudinalement.

11. Véhicule, notamment du type d'une automobile, **caractérisé en ce qu'**il comprend un agencement selon l'une quelconque des revendications précédentes.

## Patentansprüche

1. Anordnung eines Karosserieunterbaus eines Fahrzeugs (1), welche eine Vorrichtung (2) zum Schutz einer Batterieanordnung (20) aufweist, wobei der Karosserieunterbau seitlich Abschirmbleche (31, 32), mindestens eine Querstrebe (33), welche die Abschirmbleche miteinander verbindet, sowie einen die Abschirmbleche und die Querstrebe überdeckend angeordneten Boden (34) aufweist, wobei das Fahrzeug mindestens ein sich unter dem Unterbau des Fahrzeugs erstreckendes Funktionselement (40) aufweist, wobei die Schutzvorrichtung (2) mindestens einen Einsatz (10) aufweist, der zwischen einem Abschirmblech (31, 32) und einem seitlichen Rand (23) der Batterieanordnung (20) entlang einer Querachse des Fahrzeugs angeordnet ist, wobei der Einsatz (10) gemäß dem Funktionselement ausgebildet ist, insbesondere mittels mindestens eines Aufnahmeraums, der zur Aufnahme des Funktionselements (40) bestimmt ist, wobei der Einsatz (10) einen inneren Abschnitt (12), einen äußeren Abschnitt (11) und mindestens eine Befestigungsschnittstelle (13, 14), welche die reversible Anbringung des Funktionselements (40) an dem Schutzmittel ermöglicht, umfasst, **dadurch gekennzeichnet, dass** die Befestigungsschnittstelle (13, 14) durch Formen des äußeren Abschnitts (11) hergestellt ist, wobei die Schnittstelle vom Typ eines verformbaren Hakens ist, der es ermöglicht, das Funktionselement (40) zu befestigen.

2. Anordnung nach Anspruch 1, **dadurch gekennzeichnet, dass** der Einsatz einen inneren Abschnitt (12) umfasst, der an der Batterieanordnung derart befestigt ist, dass er ein Profil aufweist, das im Wesentlichen mit demjenigen des seitlichen Randes (23) identisch ist, um diesen Letzteren vertikal von unten zu überdecken.

3. Anordnung nach Anspruch 1 oder 2, **dadurch gekennzeichnet, dass** der Einsatz einen äußeren Abschnitt (11) umfasst, der an dem Abschirmblech (31, 32) derart befestigt ist, dass wenigstens ein Teil, insbesondere der vordere Teil dieses Abschnitts, ein Profil aufweist, das im Wesentlichen mit demjenigen des Abschirmblechs (31, 32) identisch ist, um sich an diesem Letzteren quer zu erstrecken, insbesondere in einem annähernd konstanten Abstand.

4. Anordnung nach Anspruch 1 oder 2, **dadurch gekennzeichnet, dass** der Einsatz einen äußeren Abschnitt (11) umfasst, der an einem Funktionselement (40) derart befestigt ist, dass wenigstens ein Teil, insbesondere der hintere Teil dieses Abschnitts, ein Profil aufweist, das im Wesentlichen mit demjenigen des Funktionselements (40) identisch ist, um sich an diesem Letzteren in einem annähernd konstanten Abstand quer zu erstrecken.

5. Anordnung nach einem der vorhergehenden Ansprüche, **dadurch gekennzeichnet, dass** der Einsatz durch Formen eines Kunststoffs, insbesondere eines Verbundwerkstoffs, hergestellt ist.

6. Anordnung nach einem der vorhergehenden Ansprüche, **dadurch gekennzeichnet, dass** der äußere Abschnitt (11) eine Höhe aufweist, die kleiner als die Höhe des inneren Abschnitts (12) ist, wobei die Abschnitte dieselbe annähernd ebene Innenfläche definieren, die an einer Versteifungsanordnung (30) befestigt ist.

7. Anordnung nach einem der vorhergehenden Ansprüche, **dadurch gekennzeichnet, dass** das Funktionselement (40) zu einem elektrischen Steuerungssystem, einem Bremssystem und/oder einem Bodenverbindungssystem gehört.

8. Anordnung nach einem der vorhergehenden Ansprüche, **dadurch gekennzeichnet, dass** der Einsatz ein Netz aus sich überkreuzenden Versteifungsrippen umfasst, welches die Verteilung eines Seitenaufpralls entlang des Abschirmblechs (31, 32) und/oder eines seitlichen Randes (23) der Batterieanordnung (20) über einen vertikalen Schutzträger (24) ermöglicht.

9. Anordnung nach dem vorhergehenden Anspruch, **dadurch gekennzeichnet, dass** sich der innere Abschnitt (12) vertikal vorstehend aus einem Boden der Batterieanordnung erstreckt, der von einer im Wesentlichen ebenen horizontalen Schutztrennwand (25) der Batterieanordnung begrenzt wird.

10. Anordnung nach einem der vorhergehenden Ansprüche, **dadurch gekennzeichnet, dass** der äußere Abschnitt (11) von einer lufttechnischen Trennwand (35) überdeckt ist, von der ein innerer Rand um den inneren Abschnitt (12) herumführt, wobei die lufttechnische Trennwand und der äußere Abschnitt (11) einen Zwischenraum definieren, durch den sich das Funktionselement (40) in Längsrichtung erstreckt.

11. Fahrzeug, insbesondere vom Typ eines Kraftfahrzeugs, **dadurch gekennzeichnet, dass** es eine Anordnung nach einem der vorhergehenden Ansprüche umfasst.

## Claims

1. Arrangement of a body understructure of a vehicle (1) having a device (2) for protecting a battery assembly (20), the body understructure laterally having skirts (31, 32), at least one transverse barrier (33) connecting the skirts to one another, and a floor (34) disposed so as to cover the skirts and the barrier, the vehicle having at least one functional element (40) extending beneath the understructure of the vehicle, the protection device (2) having at least one insert (10) disposed between a skirt (31, 32) and a lateral edge (23) of the battery assembly (20) along an axis transverse to the vehicle, the insert (10) being shaped according to the functional element, in particular by means of at least one housing for receiving the functional element (40), the insert (10) comprising an inner portion (12), an outer portion (11) and at least one fastening interface (13, 14) making it possible to reversibly mount said functional element (40) on said protection means, **characterized in that** the fastening interface (13, 14) is produced by moulding the outer portion (11), the interface being of the type of a deformable hook that makes it possible to fasten the functional element (40).

2. Arrangement according to Claim 1, **characterized in that** the insert comprises an inner portion (12) secured to the battery assembly such that it has a profile substantially identical to that of the lateral edge (23) in order to come to vertically cover the latter from below.

3. Arrangement according to Claim 1 or 2, **characterized in that** the insert comprises an outer portion (11) secured to the skirt (31, 32) such that at least a part, in particular a front part, of this portion has a profile substantially identical to that of the skirt (31, 32) in order to extend transversely in line with the latter, in particular with an approximately constant distance.

4. Arrangement according to Claim 1 or 2, **characterized in that** the insert comprises an outer portion (11) secured to a functional element (40) such that at least a part, in particular a rear part, of this portion has a profile substantially identical to that of the functional element (40) in order to extend transversely in line with the latter with an approximately constant distance.

5. Arrangement according to any one of the preceding claims, **characterized in that** the insert is produced by moulding a plastics material, in particular a composite material.

6. Arrangement according to any one of the preceding claims, **characterized in that** the outer portion (11) has a height smaller than the height of the inner portion (12), the portions defining a single approximately planar inner face fastened to a stiffening assembly (30).

7. Arrangement according to any one of the preceding claims, **characterized in that** the functional element (40) belongs to an electrical control system, a braking system and/or a ground contact system.

8. Arrangement according to any one of the preceding claims, **characterized in that** the insert comprises a mesh of criss-crossed stiffening ribs making it possible to distribute a lateral impact along the skirt (31, 32) and/or a lateral edge (23) of the battery assembly (20) via a vertical protection beam (24).

9. Arrangement according to the preceding claim, **characterized in that** the inner portion (12) protrudes vertically out of a bottom of the battery assembly that is delimited by a substantially planar horizontal partition (25) for protecting the battery assembly.

10. Arrangement according to any one of the preceding claims, **characterized in that** the outer portion (11) is covered by an aeraulic partition (35) of which an inner edge runs around the inner portion (12), the aeraulic partition and the outer portion (11) defining a space through which the functional element (40) extends longitudinally.

11. Vehicle, in particular of the motor vehicle type, **characterized in that** it comprises an arrangement according to any one of the preceding claims.
